# EUROPÄISCHE PATENTSCHRIFT

(11) **EP 1 320 493 B1**
(45) Veröffentlichungstag und Bekanntmachung des Hinweises auf die Patenterteilung: **04.05.2005**
(21) Anmeldenummer: 01974303.8
(22) Anmeldetag: 26.09.2001
(51) Int. Cl.: B65D 33/30

(54) **VERPACKUNG MIT EINROLLWIEDERVERSCHLUSS UND VERFAHREN ZUR HERSTELLUNG EINER SOLCHEN VERPACKUNG**
A ROLLABLE RE-CLOSEABLE PACKAGING AND METHOD FOR PRODUCING SUCH A PACKAGING
EMBALLAGE REFERMABLE ENROULABLE ET SON PROCEDE DE FABRICATION

(30) Priorität: 27.09.2000 DE 10047869; 12.09.2001 DE 10144997
(43) Veröffentlichungstag der Anmeldung: 25.06.2003
(73) Patentinhaber: MARS, INCORPORATED, McLean,VA 22103 (US)
(72) Erfinder: MARSCHALL, ROBERT, 73614 SCHORNDORF (DE); SANDER, HEIKE, 74172 NECKARSULM (DE); ELLENRIEDER, MICHAEL, 86157 AUGSBURG (DE); SPECHT, JULIA, 70378 STUTTGART (DE)
(74) Vertreter: Winkler, Andreas, Dr.
(86) Internationale Anmeldenummer: PCT/EP2001/011161
(87) Internationale Veröffentlichungsnummer: WO 2002/030773

(56) Entgegenhaltungen:
- US-A- 3 201 030
- US-A- 4 810 103

## Beschreibung

Die Erfindung betrifft eine Verpackung mit Einrollwiederverschluss und ein Verfahren zur Herstellung einer solchen Verpackung, insbesondere flexible Beutel für den wiederholten Verschluss, die Lagerung und die mehrfache Entnahme von flüssigem, trockenem, pulverförmigen, körnigem oder stückigem Füllgut.

Bekannte flexible Verpackungen werden durch Siegelnähte und Aufreissperforationen verschlossen und so zum Verkauf angeboten. Dabei interessiert die meisten Hersteller lediglich der Integritätsschutz des Produkts solange die Verpackung verschlossen ist oder bis das Haltbarkeitsdatum überschritten ist. Die Handhabung und somit Verbraucherfreundlichkeit findet bei vielen Verpackungen noch keine Berücksichtigung. Lediglich der Produktschutz bis zum Verbraucher ist gewährleistet. Eine Verpackung wird jedoch in den meisten Fällen nicht bei der ersten Öffnung vollständig geleert. Nachteilig für diese Verpackungen ist es deshalb, dass nach einmaliger Öffnung das Füllgut wie zum Beispiel Lebensmittel, Tiernahrung und Waschmittel in Granulat- oder Pulverform leicht ausrieseln kann oder durch Umwelteinflüsse wie Sauerstoff- und Feuchtigkeitszufuhr verklumpt, unbrauchbar oder bei Nahrungsmitteln gar ungeniessbar wird. Die herkömmlichen Methoden der Verbraucher, die Verpackungen bis zum völligen Verbrauch des Füllgutes durch manuelles Einrollen und Festhalten mit einem Haushaltgummi oder Klipps verschlossen zu halten, erwiesen sich als wenig erfolgreich zur Minderung oder gar Beseitigung der oben aufgeführten Nachteile. Es sind auch Verpackungen bekannt, die mit Verschlüssen, sogenannten Zipper- Strips, ausgestattet sind. Das sind Verriegelungen aus zwei extrudierten Kunststoffprofilen, von denen das eine als Nut und das gegenüberliegend angeordnete als Feder ausgebildet ist, die ineinander eingerasten und bei Bedarf wieder getrennt werden können. Sie ermöglichen das wiederholte Verschließen oder Öffnen von Verpackungen in flexibler Beutelform. Bei der Anwendung dieser Verschlussform besteht das Problem, dass der Benutzer beim ersten Öffnen den Zipper- Stripp nicht erkennt und diesen mit einer Schere möglicherweise beschädigt oder ganz abschneidet. Bei kleinstückigem oder pulverförmigen Füllgut, besteht des weiteren nach einigen Öffnungs- und Schließvorgängen die Gefahr, dass sich Füllgut in der Nut festsetzt, wodurch die Funktion des Verschlusses insbesondere hinsichtlich seiner Dichtheit nicht mehr ausreichend gewährleistet ist oder gänzlich versagt oder das Verschlussmaterial ermüdet und ein Verschluss überhaupt nicht mehr möglich ist. Eine weitere bekannte Methode, um die Wiederverschliessbarkeit einer flexiblen Verpackung zu realisieren, ist die Anordnung selbstklebender Laschen oder Bänder am oberen Ende der Beutel, die nach Entnahme von Teilportionen des Füllgutes über die Verpackung gefaltet werden und das restliche Füllgut verschließen. Auch bei dieser Verschlussvariante besteht erfahrungsgemäß die Gefahr, dass Füllgut an den selbstklebenden Laschen oder Bändern haften bleibt und somit die Klebekraft des Verschlusses vermindert oder aufgehoben wird.

Aus der Patentschrift US 3201030 ist auch eine Verpackung mit einem Einrollwiederverschluß bekannt. Die vorgeschlagene Lösung sieht als eine Variante die Einlagerung von vorgespannten, rückfedernden Hilfsmitteln wie Drähten in das Verpackungsmaterial vor. Die Herstellung und Endsorgung solcher Verpackungen hat sich als aufwendig und teuer erwiesen. Eine zweite Lösungsvariante dieser Patentschrift sieht die Anwendung eines Verbundmaterials vor, dessen zwei Folienlagen mit unterschiedlicher Vorspannung aufeinander Laminiert sind und so einen Einrolleffekt für eine Verpackung erzeugen sollen. Diese Lösungsvariante birgt den Nachteil, dass die Erzeugung des Einrolleffekts unkontrolliert abläuft und beim Form-, Füllund Verschließvorgang der Verpackung durch die Siegelung wieder verloren geht Dazu ist die Verarbeitung dieser Art Verbundmaterial nur auf einer stark modifizierten Form-, Fall- und Verschließmaschine möglich, was hohe Investitionskosten erfordert.

Es war daher Aufgabe der Erfindung eine Verpackung der genannten Gattung, und ein Verfahren zu deren Herstellung zu entwickeln, die für den wiederholten Verschluss, die Lagerung und die mehrfache Entnahme von flüssigem, trockenem, pulverförmigen, körnigem oder stückigem Füllgut geeignet ist, kostengünstig herstellbar ist, den Anforderungen des Integritätsschutzes des Produkts in der Verpackung genügt und die anwenderfreundlich ist.

Die erfindungsgemäße Lösung, mit den Merkmalen nach Anspruch 1, sieht deshalb eine Verpackung vor, die sich dadurch auszeichnet, dass sie ganz oder teilweise aus einem konditionierten Mehrschichtverbundmaterial besteht, oder dass die Verpackung aus einem beliebigen Mehrschichtverbundmaterial besteht und mindestens an einer Verpackungswand beginnend am Öffnungsbereich ein Klebeetikett aus dem konditionierten Mehrschichtverbundmaterial angeordnet ist. Vorteile dieser Verpackungen bestehen darin, dass sie aus verpackungsüblichen Mehrschichtverbundmaterialien wie Standardpolymeren, deren Verbundschichten durch Laminierung oder Kaschierung aufeinander angeordnet sind, herstellbar ist. Die Eigenschaft des konditionierten Mehrschichtmaterialverbundes bewirkt ein selbständiges und kontrolliertes Einrollen der Verpackung von der Verpackungsöffnung in Richtung des Verpackungsbodens. Der Einroll- und Verschlussvorgang kann beliebig wiederholt werden. Er erfolgt jeweils bis zur erreichten Ebene des Füllgutes und verschließt die noch nicht völlig leere Verpackung sicher. Dadurch wird die Handhabung und Lebensdauer der Verpackung erhöht, das Füllgut kann in beliebigen Mengen und zu beliebigen Zeiten entnommen werden und die Qualitätsmerkmale des Füllguts wie beispielsweise Aroma oder Rieselfähigkeit bleiben durch die gewährleistete Dichtheit der Verpackung wesentlich länger erhalten als bei herkömmlichen Verpackungen. Da sich die Verpackung immer bis zur jeweiligen Ebene des Füllgutes einrollt, erhält man gleichzeitig eine Anzeige der Füllstandshöhe. Eine Alternative der Lösung besteht darin, dass der Einroll- und Verschlussvorgang von einem aus konditionierten Mehrschichtverbundmaterial bestehenden Klebeetikett auf das beliebige Mehrschichtverbundmaterial der Verpackung übertragen wird. Diese Variante hat den Vorteil, dass der Konditionierungsprozeß auch außerhalb der Form-, Füll- und Verschließmaschine durchführbar ist und das Klebeetikett beginnend am Öffnungsbereich der Verpackung nach deren Fertigstellung und Befüllung aufgebracht werden kann. Das Klebeetikett kann beginnend am Öffnungsrand bei Bedarf in unterschiedlichen Längen und Breiten ausgeführt werden. Der Einroll- oder Schließvorgang ist natürlich auch durch, an mindestens einer Verpackungswand angeordnete, unter Streckspannung aufgebrachte Bänder oder Streifen aus Gummi oder flächigen Elastomeren auf das beliebige Mehrschichtverbundmaterial übertragbar. Die mit einer beliebigen Verstärkung, beispielsweise mit einem herkömmlichen Schnappverschluss, zur Arretierung der Oberkanten der Verpackungsöffnung kombinierte Verpackung ermöglicht eine noch bessere Handhabung der erfindungsgemäßen Verpackung. Hervorzuheben ist außerdem, dass sich die Verpackung nach entgültiger Entleerung gänzlich zusammenrollt, wodurch sie sich Volumen sparend entsorgen lässt.

Besonders hervorzuheben sind die Eigenschaften des Mehrschichtverbundmaterials, die durch eine Konditionierung, gemäß Anspruch 4, aktiviert werden. Mindestens in einer Lage des Mehrschichtverbundmaterials muss bereits bei der Folienherstellung ein Spannungszustand erzeugt und eingefroren sein. Durch ganzflächige oder partielle Konditionierung mittels Wärmeeinwirkung des so hergestellten Mehrschichtfolienverbunds dehnt sich die mit dem Spannungszustand versehene Lage des Verbunds monoaxial aus oder zieht sich zusammen. Dieser Vorgang wird durch den Verbund auf das Mehrschichtverbundmaterial der gesamten Verpackung oder auf partielle Teile der Verpackung oder von dem Klebeetikett aus konditioniertem Mehrschichtverbundmaterial auf die Verpackung übertragen und auf diese Weise der erfindungsgemäße Einrollwiederverschluß geschaffen. Die Erzeugung dieser Materialeigenschaften durch einen bisher mit anderen technischen Zielstellungen angewendeten herkömmlichen Konditionierungsprozeß gewährleistet eine wesentlich erweiterte Anwendungsbreite der Verpackungen mit dem erfindungsgemäßen Einrollwiederverschluß. Durch unterschiedliche definierbare Materialstärken und/oder unterschiedliche Dimensionsstabilitäten der Lagen des Verbunds können nach Bedarf unterschiedliche Einrolldurchmesser und Einrollstärken an der Verpackung realisiert werden.

Von besonderem Vorteil ist es auch, dass das Verfahren zur Herstellung der Verpackungen, nach Anspruch 4, auf herkömmlichen Form-, Füll- und Verschließmaschinen angewendet werden kann. Teure Investitionen sind nicht erforderlich. Das Verfahren lässt die Benutzung von Standardfolien zu. Die Konditionierung des Materials ist ebenfalls mit diesen Maschinen möglich. Die ganzflächige oder partielle Konditionierung unter Wärmeeinwirkung auf das Verpackungsmaterial ist vor, während oder nach dem Form-, Füll- und Verschließvorgang der Verpackung durchführbar. Das ermöglicht eine breite technologische Vielfalt beim Herstellungsprozeß.

Schließlich erweitert das Verfahren und die erfindungsgemäße Verpackung die Anwendungsvielfalt der Mehrschichtfolienverbunde erheblich. Der erfindungsgemäße Einroll- und Verschlussvorgang gewährleistet eine saubere Handhabung der Verpackungen für den Verbraucher. Unwirksame Behelfsmaßnahmen wie Einrollen und Halten mit Haushaltgummis oder ähnlichem entfallen. Die Verpackung schützt das Füllgut für einen längeren Zeitraum und erhöht die Haltbarkeit von Nahrungs- oder Genussmitteln auch nach Öffnung der Verpackung.

Die Erfindung ist nachstehend anhand mehrerer Ausführungsbeispiele näher beschrieben. Dabei zeigen die Zeichnungen in
- Fig.1: die perspektivische Vorderansicht einer gefüllten Verpackung mit einem konditionierten Mehrschichtverbundmaterial als Einrollwiederverschluß,
- Fig.2: die perspektivische Vorderansicht einer halb leeren Verpackung aus einem konditionierten Mehrschichtverbundmaterial als Einrollwiederverschluß,
- Fig.3: die perspektivische Vorderansicht einer Verpackung aus beliebigem Mehrschichtverbundmaterial mit einem verkürzten Klebeetikett aus einem konditionierten Mehrschichtverbundmaterial als Einrollwiederverschluß,
- Fig.4: die perspektivische Vorderansicht einer Verpackung aus beliebigem Mehrschichtverbundmaterial mit einem länger ausgeführten Klebeetikett aus einem konditionierten Mehrschichtverbundmaterial als Einrollwiederverschluß,
- Fig. 5: die Vorderansicht einer geöffneten Verpackung aus einem konditionierten Mehrschichtverbundmaterial als Einrollwiederverschluß kombiniert mit einer beliebigen Verstärkung zur Arretierung des Öffnngsbereiches,
- Fig. 6: die perspektivische Vorderansicht einer Verpackung aus einem beliebigen Mehrschichtverbundmaterial mit unter Vorspannung aufgebrachten Bändern oder Streifen als Einrollwiederverschluß,
- Fig. 7: Ausschnitt aus einem geschnittenen beliebigen Mehrschichtverbundmaterial,
- Fig. 8: Ausschnitt aus einem geschnittenen konditionierten Mehrschichtverbundmaterial,
wobei gleiche Teile mit gleichen Ziffern bezeichnet sind.

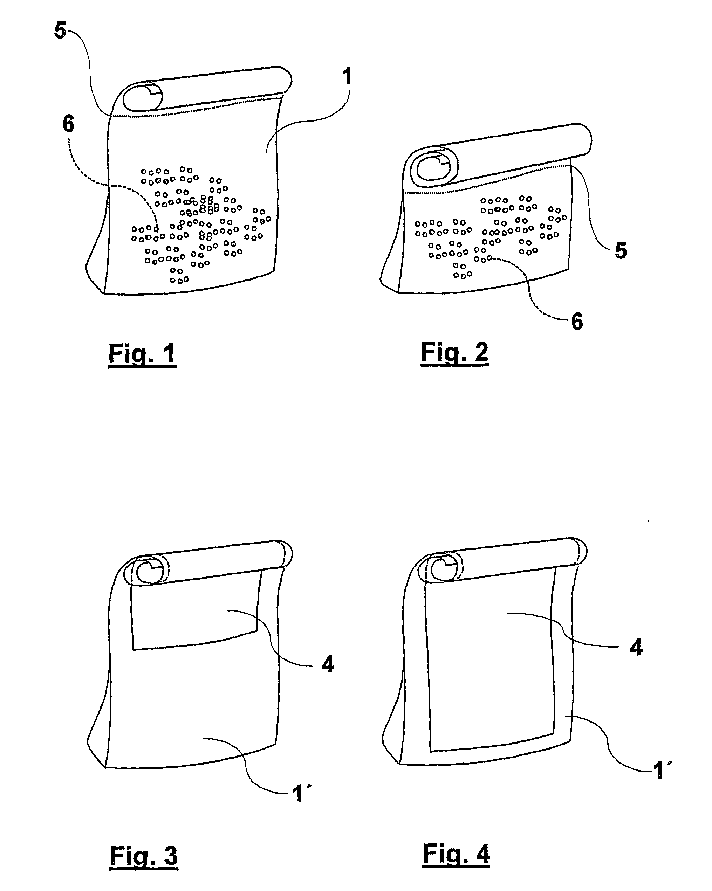

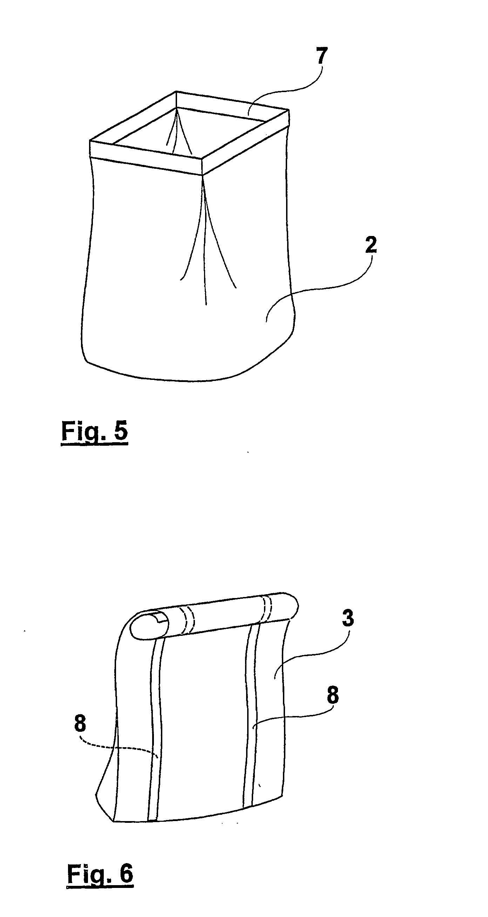

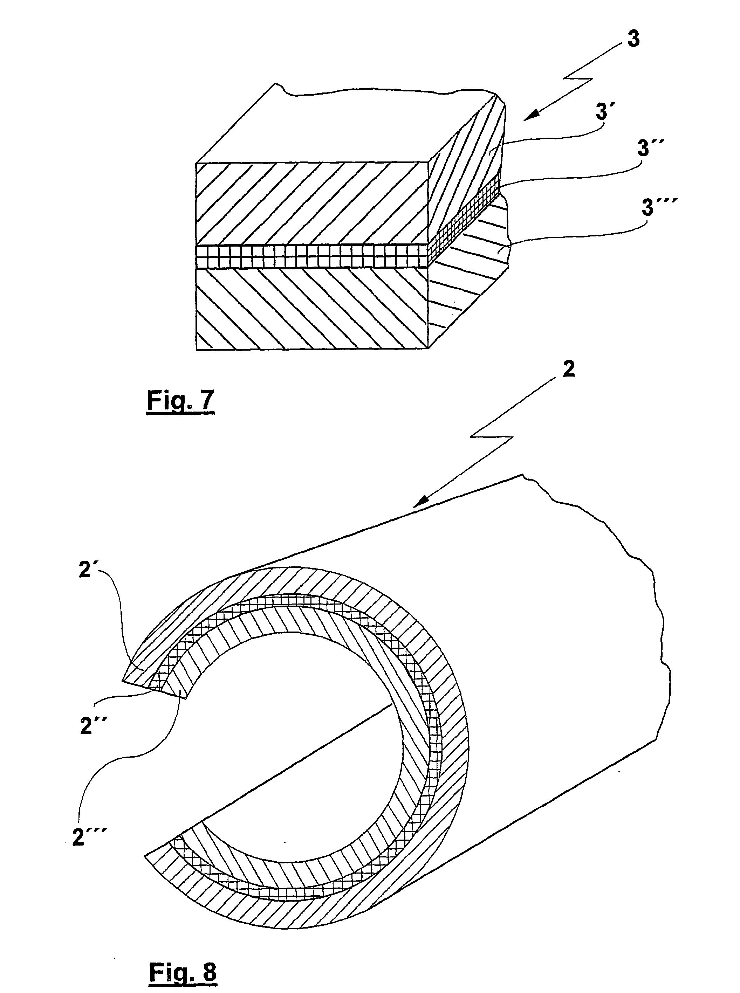

Das erste Ausführungsbeispiel ist in Fig.1 näher dargestellt. Als Verpackung 1 wurde vorzugsweise ein Standbeutel gewählt, wie er heute in vielen Anwendungsbereichen für verschiedenes Füllgut 6, zum Beispiel für Lebensmittel und für Tiernahrungsmittel verwendet wird. Der Standbeutel wurde aus einem herkömmlichen Mehrschichtverbundmaterial 3 hergestellt, das vorzugsweise aus drei Lagen 3', 3" und 3''' besteht. Eine der drei Lagen, zum Beispiel die äußere Lage 3' wurde bei der Herstellung des Mehrschichtverbundmaterials 3 in einen Spannungszustand versetzt, der im Verbund zunächst keine Auswirkungen zeigt. Aus diesem standardmäßig so vorbehandelten Mehrschichtverbundmaterial 3 werden auf einer herkömmlichen Form-, Füll- und Verschließmaschine die Standbeutel hergestellt. Im Ausführungsbeispiel werden die Standbeutel mit einem Füllgut 6 wie beispielsweise Trockenfutter für Hunde gefüllt und verschlossen. Nach dem Verschließen werden die Standbeutel zum Beispiel ganzflächig einer Konditionierung mittels Wärme, beispielsweise durch UV- Bestrahlung, unterzogen. Es wäre auch möglich, partiell nur eine Verpackungswand 1', nämlich die mit der äußeren aktivierten Lage 3' zu konditionieren. Jetzt dehnt sich die durch einen Spannungszustand aktivierte äußere Lage 3' aus und die Verpackung 1, in diesem Ausführungsbeispiel der Standbeutel, rollt sich von der Verpackungsöffnung in Richtung des Verpackungsbodens monoaxial zusammen, bis sie eine Ebene 5 des oberen Füllstandes des Füllgutes 6 erreicht hat. Der Verbraucher öffnet und entnimmt jeweils die gewünschten Teilmengen Füllgut 6 aus der Verpackung 1. Nach jeder Entnahme von Füllgut 6 rollt sich die Verpackung 1 jeweils bis zur nächsten niedrigeren Ebene 5 des Füllstands, gemäß Fig. 2, zusammen, bis die Verpackung 1 völlig entleert ist. In einem zweiten Ausführungsbeispiel, gemäß Fig. 3, besteht die Verpackung 1 vorzugsweise aus einem beliebigen vorzugsweise dreilagigen Mehrschichtverbundmaterial 3, dessen Lagen 3', 3" oder 3''' keine eingefrorene Spannung aufweisen. Auf eine der beiden Verpackungswände 1' wird vor dem Form-, Füll- und Schließvorgang beginnend vom Öffnungsbereich der Verpackung 1 ein kurzes Klebeetikett 4 aufgebracht. Das Klebeetikett 4 besteht beispielsweise aus einem dreilagigen Mehrschichtverbundmaterial 3, dessen Lage 3''' bei der Herstellung eine Vorspannung erhalten hat. Vorzugsweise nach dem Abfüllen und Verschließen der Verpackungen 1 erfolgt nun eine partielle Konditionierung des Klebeetiketts 4 mittels Wärmeeinwirkung, dessen mit einer Spannung aktivierte Lage 3''' sich nun zusammenzieht und das Klebeetikett 4 monoaxial zum Einrollen bringt. Der Einrolleffekt wird durch das Klebetikett 4 auf die Verpackung 1 übertragen. In diesem Beispiel rollt sich die Verpackung 1 bedarfsweise nur bis zum Ende des Klebeetiketts 4 ein. Fig.4 zeigt das zweite Ausführungsbeispiel mit einem über eine gesamte Verpackungswand 1' ausgeführten Klebeetikett 4 , wodurch auch diese sich bis zu ihrer völligen Entleerung monoaxial bis zum Boden der Verpackung 1 zusammenrollt. Der Einrolleffekt wird in diesem Beispiel vom Klebetikett 4 auf die Verpackung übertragen. Das Klebeetikett 4 kann vor, während oder nach dem Form-, Füll- und Verschließvorgang aufgeklebt und konditioniert werden. Eine dritte Ausführungsform, nach Fig. 5, sieht eine Kombination der Verpackung 1 nach den ersten beiden Ausführungsvarianten vor. Die Verpackung 1 erhält hierbei an den Rändern des Öffnungsbereiches eine Verstärkung 7, beispielsweise durch einen herkömmlichen Schnappverschluß oder dergleichen, zur Arretierung der Oberkanten der Verpackungsöffnung. Schließlich sieht eine vierte Ausführungsvariante, nach Fig.6 vor, dass der Einrollwiederverschluss vorzugsweise durch mindestens an einer Verpackungswand 1' der Verpackung 1 angeordnete, unter Streckspannung aufgebrachte Bänder oder Streifen 8 aus Gummi oder flächigen Elastomeren auf das beliebige Mehrschichtverbundmaterial 3 der Verpackung 1 übertragen wird. Fig. 7 zeigt einen herkömmlichen Mehrschichtmaterialverbund 3 der vorzugsweise aus drei Lagen 3', 3" und 3''' gebildet ist, die auf herkömmliche Weise aufeinander kaschiert oder laminiert sind. Wobei es für den Anwendungszweck der Verpackungsherstellung mit Einrollwiederverschluß genügt, dass mindestens eine der Lagen 3' oder 3" oder 3''' aus einem Polymer, Lack oder Schaum besteht, die beim Kaschieren eine innere eingefrorene Spannung erhält und die sich bei einem Konditioniervorgang durch Wärmeeinwirkung ausdehnt oder zusammenzieht und so ein konditioniertes Mehrschichtverbundmaterial (2) bildet. Es ist bei Bedarf jedoch auch möglich ein Mehrschichtverbundmaterial 3 herzustellen, dessen äußere Lage 3' und dessen innere Lage 3''' einen eingefrorenen Spannungszustand aufweisen und dessen mittlere Lage 3" dimensionsstabil ist. Bei einer Konditionierung eines solchen Mehrschichtverbundmaterials 3 zieht sich beispielsweise die innere Lage 3''' zusammen, die äußere Lage 3' dehnt sich aus und die mittlere Lage 3" wird durch die beiden anderen Lagen 3' und 3''' mit monoaxial eingerollt. Es entsteht beispielsweise ein konditioniertes Mehrschichtverbundmaterial 2, wie es in Fig. 8 näher dargestellt ist. Durch unterschiedliche Materialstärken und/oder unterschiedliche Dimensionsstabilitäten der Lagen des Verbunds kann das Einrollverhalten des Materials für die Verpackungen 1 kontrolliert werden, dahingehend, dass unterschiedliche Einrolldurchmesser und Einrollstärken erzeugt werden können. Als weitere Kontrollmöglichkeit können zusätzliche Lagen von konditionierbarem Material in das Mehrschichtverbundmaterial 3 eingebaut werden, die eine gute Regulierung des Spannungsaufbaus innerhalb des Verbundes begünstigen.

## Patentansprüche

1. Verpackung aus flexiblen Material, die durch Einrollen wiederholt verschließbar ist, **dadurch gekennzeichnet, dass** eine Verpackung (1) ganz oder teilweise aus einem konditionierten Mehrschichtverbundmaterial (2) besteht, oder dass die Verpackung (1) aus einem beliebigen Mehrschichtverbundmaterial (3) besteht und mindestens an einer Verpackungswand (1') beginnend im Öffnungsbereich ein Klebeetikett (4) aus dem konditionierten Mehrschichtverbundmaterial (2) angeordnet ist, dass sich die Verpackung (1) nach dem Konditionieren selbständig und kontrolliert von der Verpackungsöffnung in Richtung des Verpackungsbodens monoaxial, bis zu einer jeweiligen Ebene (5) eines Füllgutes (6) wiederholt einrollt und verschließt und dass der Einroll- oder Schließvorgang durch die Eigenschaften des konditionierten Mehrschichtverbundmaterials (2) der Verpackung (1) oder des Klebeetiketts (4) realisiert ist, wobei die Übertragung der Eigenschaften entweder direkt oder von dem Klebeetikett (4) auf die Verpackung (1) erfolgt, wobei das Mehrschichtverbundmaterial (3) aus einem Verbund von mindestens zwei Lagen besteht, die auf herkömmliche Weise kaschiert oder laminiert sind, mindestens eine beliebige Lage (3') oder (3") aus einem Polymer, Lack oder Schaum eine innere eingefrorene Spannung aufweist, die sich bei einem Konditioniervorgang durch Wärmeeinwirkung ausdehnt oder zusammenzieht und so ein konditioniertes Mehrschichtverbundmaterial (2) bildet, das sich monoaxial einrollt und durch unterschiedliche Materialstärken und/oder unterschiedliche Dimensionsstabilitäten der Lagen des Verbunds unterschiedliche Einrolldurchmesser und Einrollstärken realisierbar sind.

2. Verpackung nach Anspruch 1, **dadurch gekennzeichnet, dass** die Verpackung (1) neben dem konditionierten Mehrschichtverbundmaterial (2) der Verpackung (1) oder des Klebeetiketts (4) im Öffnungsbereich mit einer herkömmlichen Verstärkung (7) zur Arretierung der Oberkanten der Verpackungsöffnung kombiniert ist.

3. Verpackung nach Anspruch 1, **dadurch gekennzeichnet, dass** der Einroll- oder Schließvorgang durch mindestens an einer Verpackungswand (1') der Verpackung (1) angeordnete, unter Streckspannung aufgebrachte Bänder oder Streifen (8) aus Gummi oder flächigen Elastomeren auf das beliebige Mehrschichtverbundmaterial (3) der Verpackung (1) übertragbar ist.

4. Verfahren zur Herstellung der Verpackung nach Anspruch 1, **dadurch gekennzeichnet, dass** das beliebige Mehrschichtverbundmaterial (3) auf herkömmlichen Maschinen oder Anlagen zur Herstellung von Verpackungen (1) vor, während oder nach dem Form-, Fall- und Verschließvorgang der Verpackung (1) durch Wärmeeinwirkung konditioniert wird, dass die Konditionierung auf das gesamte Mehrschichtverbundmaterial (3) ausgedehnt ist oder partiell auf definierbare Bereiche des Mehrschichtverbundmaterials (3) der Verpackung (1) oder des Klebeetiketts (4) begrenzt ist und dass das Klebeetikett (4) vor oder nach dem Aufkleben auf das Mehrschichtverbundmaterial (3) der Verpackung (1) konditioniert ist.

## Claims

1. Packaging made of flexible material, which is resealable by rolling up, **characterised in that** a packaging (1) is made completely or partially from a conditioned multilayered composite material (2), or that the packaging (1) is made from any desired multilayered composite material (3) and an adhesive label (4) made of the conditioned multilayered composite material (2) is arranged at least on one packaging wall (1') beginning in the opening region, that after conditioning the packaging (1) repeatedly rolls up and seals automatically and in a controlled manner from the packaging opening in the direction of the packaging base on a single axis as far as a respective level (5) of a filler material (6), and that the rolling and sealing action is performed as a result of the properties of the conditioned multilayered composite material (2) of the packaging (1) or adhesive label (4), wherein the transmission of the properties onto the packaging (1) occurs either directly or from the adhesive label (4), wherein the multilayered composite material (3) is composed of a composite arrangement of at least two layers, which are coated or laminated in a conventional manner, at least any one layer (3') or (3") made of a polymer, paint or foam has an internal frozen-in strain, which expands or contracts through thermal effect during a conditioning process and thus forms a conditioned multilayered composite material (2), which rolls up on a single axis, and different roll-up diameters and roll-up thicknesses are achievable by different material thicknesses and/or different dimensional stabilities of the layers of the composite arrangement.

2. Packaging according to Claim 1, **characterised in that** besides the conditioned multilayer composite material (2) of the packaging (1) or the adhesive label (4), the packaging (1) is combined with a conventional stiffening (7) in the opening region to retain the upper edges of the packaging opening.

3. Packaging according to Claim 1, **characterised in that** the rolling or sealing action can be transmitted onto the desired multilayered composite material (3) of the packaging (1) by bands or strips (8) of rubber or flat elastomers arranged at least on one packaging wall (1') of the packaging and applied under yield stress.

4. Process for the production of the packaging according to Claim 1, **characterised in that** the desired multilayered composite material (3) is conditioned before, during and after the forming, filling and sealing process of the packaging (1) by thermal action using conventional machines or systems for the production of packaging (1), that the conditioning extends over the entire multilayered composite material (3) or is partially restricted to definable regions of the multilayered composite material (3) of the packaging (1) or adhesive label (4), and that the adhesive label (4) is conditioned before or after being adhered to the multilayered composite material (3) of the packaging (1).

## Revendications

1. Emballage en matériau flexible, qui est susceptible de se refermer par enroulement, **caractérisé en ce qu'**un emballage (1) se compose en totalité ou en partie d'un matériau composite conditionné (2) multicouches, ou bien **en ce que** l'emballage (1) se compose d'un matériau composite multicouches (3) choisi, et **en ce qu'**une étiquette collante (4) composée du matériau composite multicouches conditionné (2) est disposée au moins sur une paroi d'emballage (1') commençant dans la zone d'ouverture, **en ce que** l'emballage (1) s'enroule et s'obture automatiquement et de façon contrôlée après le conditionnement à partir de l'ouverture d'emballage de façon monoaxiale en direction du fond d'emballage jusqu'à un plan (5) correspondant d'un produit de remplissage (6), et **en ce que** le processus d'enroulement ou de fermeture est réalisé par les propriétés du matériau composite multicouches (2) conditionné de l'emballage (1) ou de l'étiquette collante (4), la transmission des propriétés étant réalisée, soit directement, soit par l'étiquette collante (4) sur l'emballage (1), le matériau composite multicouches (3) se composant d'un composite d'au moins deux couches qui sont stratifiées ou laminées de façon connue, au moins une couche choisie (3') ou (3") composée d'un polymère, d'une laque ou d'une mousse présentant une contrainte interne résiduelle qui se détend ou se réduit par un processus de conditionnement sous l'action de la chaleur et forme ainsi un matériau composite multicouches (2) conditionné qui s'enroule de façon monoaxiale et différents diamètres d'enroulement et différentes forces d'enroulement étant susceptibles d'être réalisés en utilisant des forces de matériau différentes et/ou des stabilités dimensionnelles différentes des couches du composite.

2. Emballage selon la revendication 1, **caractérisé en ce que** l'emballage (1), à côté du matériau composite multicouches (2) conditionné de l'emballage (1) ou de l'étiquette collante (4) est combiné dans la zone d'ouverture avec un renforcement usuel (7) pour arrêter le bord supérieur de l'ouverture d'emballage.

3. Emballage selon la revendication 1, **caractérisé en ce que** le processus d'enroulement ou de fermeture est susceptible d'être transmis sur le matériau composite multicouches (3) choisi de l'emballage (1) par au moins des bandes ou des rubans (8) en caoutchouc ou en élastomères plans disposés sur au moins une paroi d'emballage (1') de l'emballage (1) et placés sous contrainte de traction.

4. Procédé de fabrication de l'emballage selon la revendication 1, **caractérisé en ce que** le matériau composite multicouches (3) choisi est conditionné par l'action de la chaleur sur des machines ou installations usuelles pour la fabrication d'emballages (1) avant, pendant ou après le processus de formage, de remplissage et de fermeture de l'emballage (1), **en ce que** le conditionnement est étendu sur la totalité du matériau composite multicouches (3) ou bien est délimité partiellement sur des zones susceptibles d'être définies du matériau composite multicouches (3) de l'emballage (1) ou de l'étiquette collante (4), et **en ce que** l'étiquette collante (4) est conditionnée avant ou après le collage sur le matériau composite multicouches (3) de l'emballage (1).
